# FASCICULE DE BREVET EUROPEEN

(11) **EP 0 589 884 B1**
(45) Date de publication et mention de la délivrance du brevet: **11.10.1995**
(21) Numéro de dépôt: 92903974.1
(22) Date de dépôt: 16.01.1992
(51) Int. Cl.: G07F 7/10, G07F 7/08, G07C 9/00, G06K 19/06

(54) **PROCEDE SECURISE DE CHARGEMENT DE PLUSIEURS APPLICATIONS DANS UNE CARTE A MEMOIRE A MICROPROCESSEUR**
GESICHERTES VERFAHREN ZUM LADEN VON MEHRFACHEN ANWENDUNGEN IN EINER MIKROPROZESSOR-SPEICHERKARTE
SECURED METHOD FOR LOADING A PLURALITY OF APPLICATIONS INTO A MICROPROCESSOR MEMORY CARD

(30) Priorité: 18.01.1991 FR 9100560
(43) Date de publication de la demande: 06.04.1994
(73) Titulaire: GEMPLUS CARD INTERNATIONAL, F-13420 Gémenos (FR)
(72) Inventeur: GRIMONPREZ, Georges, F-59650 Villeneuve-d'Asq (FR); PARADINAS, Pierre, F-59650 Villeneuve-d'Asq (FR)
(74) Mandataire: Ballot, Paul Denis Jacques
(86) Numéro de dépôt international: FR9200039
(87) Numéro de publication internationale: WO9213322

(56) Documents cités:
- EP-A- 0 152 024
- EP-A- 0 218 176
- EP-A- 0 261 030
- EP-A- 0 262 025
- WO-A-87/07060
- WO-A-87/07061
- WO-A-88/09019
- US-A- 4 829 169

## Description

### PROCEDE SECURISE DE CHARGEMENT DE PLUSIEURS APPLICATIONS DANS UNE CARTE A MEMOIRE A MICROPROCESSEUR

La présente invention a été faite en collaboration avec l'Université des Sciences et Techniques de Lille, Laboratoires CERIM et LIFL. Elle a pour objet un procédé sécurisé de chargement de plusieurs applications dans une carte à mémoire munie d'un microprocesseur, dite souvent carte à puce. De telles cartes à puce ont typiquement trois types d'utilisation. Dans une première utilisation d'identification elles constituent des clefs permettant à leur porteur d'accéder à un lieu ou à un service. Dans une utilisation monétaire, elles sont soit préchargées avec des unités représentatives d'une possibilité de consommation chez un émetteur de cartes à puce (télécommunications en général), soit l'information qu'elles contiennent représente un solde d'un compte bancaire. Comme dernier type d'utilisation, on note le stockage de données : par exemple, dans un but de gestion de sa santé, chaque individu est muni d'une carte dans laquelle son dossier médical peut être enregistré, ou encore la carte peut remplacer une carte d'identité.

La présente invention vise à permettre la coexistence, sur une même carte, de ces différentes utilisations, sans que l'usage de la carte fait pour une application puisse nuire à l'utilisation de la carte pour d'autres applications. Dans ce but, l'invention procure un procédé sécurisé de chargement des différentes applications de manière à ce qu'elles ne puissent pas interférer les unes avec les autres. L'invention couvre aussi la facilité de structuration attachée à une application et l'interrogation des données par application. De plus, le système permet d'offrir la possibilité aux applications de laisser "voir" certaines données à certaines applications en toute confidentialité.

On connaît un premier mode de gestion de plusieurs applications dans une seule carte. On va le décrire ci-après et on montrera que malgré les performances dont il dispose, ce procédé de chargement connu rencontre certaines limitations. Le procédé de l'invention montrera comment dépasser ces limitations.

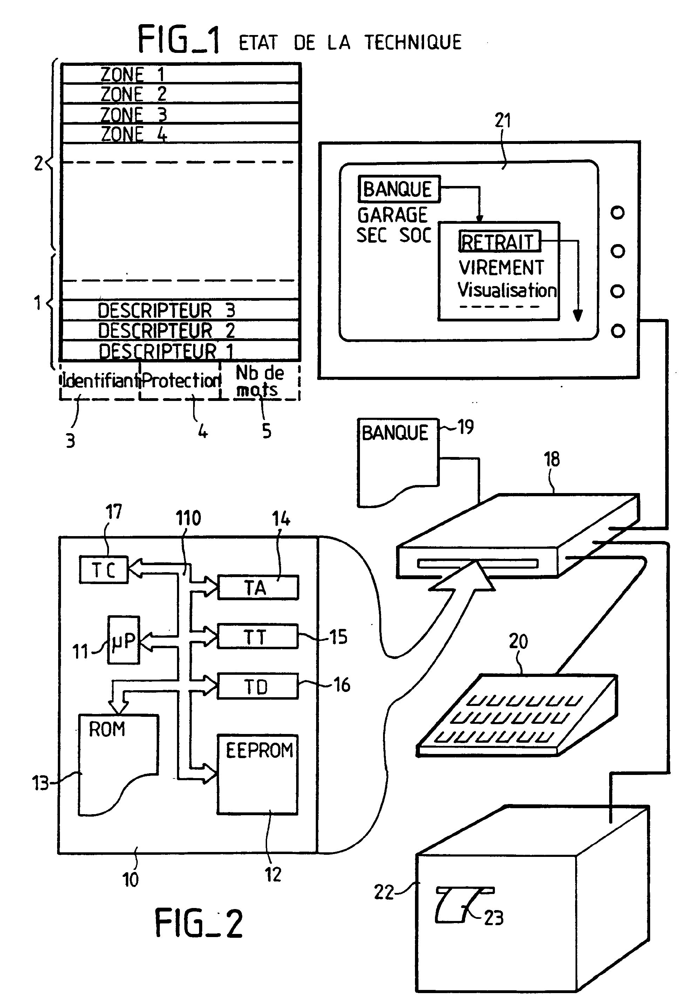

La figure 1 donne un exemple d'un partage de la mémoire d'une carte à puce pour convenir à plusieurs applications. Une mémoire d'une telle carte à puce est dans ce cas divisée physiquement en deux parties essentielles. Une première partie 1 de description contient des descripteurs, une deuxième partie 2 comprenant des zones de mémorisation pure. Un descripteur est représentatif d'une application. Il comporte un certain nombre d'octets en langage binaire. Un premier octet 3 est dit octet identifiant. Il permet de désigner l'application. Si, au moment d'une transaction avec la carte, on présente un code secret et l'identification de l'application on aboutit immédiatement dans le descripteur pour lequel l'identifiant correspond au code secret présenté.

Un descripteur comporte aussi, à la suite de l'identifiant, une protection 4. Un premier octet de cette protection 4 concerne la protection en lecture des mots de la mémoire, un autre octet concernant la protection en écriture, un troisième et un quatrième octet concernant l'effacement ou la mise à jour si par ailleurs la technologie (EEPROM) de la carte le permet. On pourra admettre par exemple que ces informations sont codées sur un bit de l'octet de protection, valant zéro il empêche l'action, alors qu'il l'autorise s'il vaut un. De même, en écriture, on pourra admettre que le troisième bit (ou un autre bit) du deuxième octet de protection interdit l'écriture si sa valeur est zéro ou au contraire l'autorise si sa valeur est un (ou éventuellement le contraire). De même, pour l'effacement ou la mise à jour.

Comme dernière partie essentielle, un descripteur comporte enfin un nombre 5 des mots mémoires utilisés par l'application concernée. Ce nombre est codé par exemple sur deux octets après les codes de la protection 4. Une application concernée par un descripteur peut ainsi contenir un nombre de mots mémoires égal à un nombre quelconque : par exemple 18. Pour savoir où se trouvent les mots de la mémoire, dans la partie 2 de cette mémoire, qui correspondent à cette application, une instruction du microprocesseur de la carte à puce calcule que la première adresse des 18 mots autorisés est égale à la somme, augmentée de un, des mots alloués aux précédents descripteurs dans la liste des descripteurs de la carte à puce. La dernière adresse autorisée est égale à cette somme augmentée du nombre de mots indiqués dans le descripteur : c'est-à-dire ici 18.

Si, dans un exemple, un identifiant a correspondu au troisième descripteur, indépendamment de savoir si on pourra lire ou écrire dans les mots mémoires concernés, on saura que la zone mémoire allouée à l'application correspond à celle du descripteur 3, qu'elle est placée après celles allouées à ces descripteurs 1 et 2 respectivement, et que sa longueur est limitée par le nombre de mots alloués à ce descripteur 3.

Les micro-processeurs comportent donc actuellement, dans leur jeu d'instructions, des instructions organisées en séquence et stockées d'une manière définitive dans la mémoire (ROM) de la carte à puce, au terme desquelles d'une part on sait repérer une application choisie, et d'autre part on sait limiter de manière irrémédiable l'accès à un ensemble alloué de mots mémoires.

Pour créer de nouvelles applications, il est par ailleurs prévu dans ce jeu d'instructions une instruction de création par laquelle il est possible d'ajouter un descripteur à la suite des descripteurs déjà présents (dans la mesure où la place en mémoire le permet), et d'allouer à cette application décrite par ce descripteur un nombre de mots mémoires (là aussi en fonction d'une place mémoire disponible dans la carte). La zone mémoire allouée à une nouvelle application est complètement indépendante de celle allouée aux précédentes applications.

Cette technique, avec le jeu d'instructions associé, tout en étant efficace présente une première limitation qui est celle d'interdire à une application d'aller travailler dans la zone mémoire réservée à une autre application précédemment enregistrée. Ceci est compréhensible puisque c'est le but sécuritaire du système. Cependant, dans certain cas, il est possible que le titulaire d'une application souhaite, dans une application complémentaire que lui même programmerait, accéder à une ou des zones mémoires qu'il s'est précédemment allouées. Là ce n'est pas possible. La structure n'est pas souple.

Pour donner un ordre d'idée, on pourrait admettre dans une application bancaire qu'un banquier a déjà autorisé, par une application enregistrée et représentée par un descripteur 1, au titulaire de la carte de prélever une certaine somme d'argent par semaine sur son compte. Il pourrait par la suite vouloir autoriser ce même titulaire à effectuer des virements, compte à compte, à partir du compte bancaire représenté par sa carte à puce. Cette deuxième application, dans la situation actuelle, doit être entrée complètement indépendamment de la première. Ceci conduit à une duplication de certaines zones mémoires, et à un problème de leur gestion. Le solde présent dans une des zones mémoires d'une application est par exemple affecté par un retrait, alors que le solde, en théorie le même, dans une autre zone mémoire correspondant au virement, n'est pas corrélativement débité de la somme correspondant au retrait.

Dans ce cas, la solution consisterait pour le banquier à supprimer une des applications, et à entrer une autre application, en remplacement, qui comprendrait la totalité des instructions des applications précédentes. Ceci provoque une perte de place dans la carte. Comme par ailleurs on sait que les tailles mémoires dans ces cartes sont limitées, on comprend que cette technique n'est pas sans inconvénient.

En outre, les derniers octets du descripteur renseignent sur le nombre des mots utilisables dans la mémoire, mais ceci n'est pas toujours une bonne façon de procéder. En effet, en particulier dans les opérations de stockage de données pures, on peut retenir comme longueur de mot mémoire, soit des longueurs fixes : par exemple 30 octets (chaque octet pouvant être affecté à un caractère), soit une longueur variable. Mais dans ce cas, on doit, après chaque information enregistrée, faire apparaître un octet (un caractère) séparateur, par exemple correspondant en langage ASCII à une étoile ou une barre de fraction oblique ou autre. Une telle structuration présente l'inconvénient qu'elle nécessite d'être connue d'une manière précise par les programmeurs qui utilisent les cartes, ce qui conduit dans certains cas à des lourdeurs d'utilisation. Même pour une application très simple il est nécessaire de connaître parfaitement tout le fonctionnement de la carte et du microprocesseur.

Par ailleurs, le format en longueur fixe peut, dans la plupart des cas, conduire à une perte de place systématique du fait d'un sur-dimensionnement des longueurs des mots pour palier tous les problèmes.

Les problèmes de sécurité ou de droit d'accès aux données de la carte sont liés à l'emplacement de ces données dans la mémoire.

On connaît également un autre état de la technique divulgué par le document WO-A-8707061. Mais ce document ne prévoit qu'une structure hiérarchique des intervenants. Les intervenants d'un même niveau hiérarchique ne sont pas censés pouvoir intervenir sur des niveaux differents. A fortiori des intervenants étrangers à l'application ne peuvent être rangés dans la hiérarchie et être autorisés à consulter, voire modifier, des enregistrements d'un tableau de données. Ce document ne propose aucune solution pour remédier à ce problème.

L'invention a pour objet de remédier à ces inconvénients et limitations, en proposant une structure et une organisation des données des applications dans la carte complètement différente et dont la sécurité ne requiert pas d'imposer aux données des places particulières en mémoire. Dans cette structure, au lieu d'associer comme élément indissociable, d'une part un identifiant relatif à l'application, d'autre part des conditions de protection, et enfin des allocations de zones mémoires avec lesquelles les applications travaillent, on a préféré organiser les relations entre ces différents concepts de manière hiérarchique.

Comme on le verra par la suite, on crée d'abord une relation entre les applications, les identifiants, et de préférence des codes secrets. Cette relation est mémorisée dans la carte dans une table dite table des applications. Ensuite, on enregistre dans une deuxième table, dite table des tableaux, les relations qui peuvent exister entre une application donnée et un tableau de données avec lequel cette application travaille. Comme caractéristique principale, la création d'un tableau de données n'est autorisée que pour un propriétaire d'application. Le tableau de données concerné sera alors dit, dans la suite de cet exposé, comme appartenant à l'application. Enfin, dans une troisième table, dite table des droits, on organise les possibilités d'interaction des différentes applications et applications-utilisateur sur les tableaux créés.

On distingue donc ici des classes entre des applications, par exemple l'application bancaire, et des applications-utilisateur. On verra que pour différence essentielle, entre les applications et les applications-utilisateur dans la table des applications, on alloue aux applications une possibilité de mémoire (pour créer des tableaux de données correspondant à cette application), alors que les applications-utilisateur ne reçoivent aucune possibilité mémoire dans ce but. Les applications-utilisateur sont obligées pour travailler d'utiliser une partie de la mémoire qui leur aura été prêtée par une application.

Comme avantage essentiel, le système de l'invention permet la modification au fur et à mesure des tableaux de données, la création et la destruction, par le propriétaire d'une application, de ses applications-utilisateur, et la délégation, également par ce même propriétaire d'application, de droits d'accès sur ses tableaux de données à d'autres applications ou applications-utilisateur. Les applications-utilisateur peuvent travailler sur des tableaux de données déjà présents dans la mémoire de la carte, dans la mesure où le titulaire de l'application le permet (table des droits).

Par ailleurs, on règle la question des économies de place en mémoire, en autorisant, dans la table des tableaux de données, la possibilité systématique d'avoir des enregistrements de longueur variable.

L'invention a donc pour objet, un procédé selon la revendication 1 de chargement et de gestion de plusieurs applications dans une carte à puce.

Bien que, du point de vue logique, les applications et les applications-utilisateur aient une même structure, les conditions d'utilisation qui les concernent sont différentes. Par ailleurs, l'ensemble des opérations décrites étant "dynamique", des actions sur les tableaux ou la gestion des applications et applications-utilisateur peuvent intervenir dans tout le cycle de vie de la carte.

L'invention sera mieux comprise à la lecture de la description qui suit et à l'examen des figures qui l'accompagnent. Celles-ci ne sont données qu'à titre indicatif et nullement limitatif de l'invention.

Les figures montrent :
- figure 1 : la représentation déjà commentée d'une organisation de la mémoire d'une carte à puce dans l'état de la technique ;
- figure 2 : la représentation schématique d'une carte à puce selon l'invention et son utilisation comme outil de transaction ;
- figures 3 à 5 : des représentations précises respectivement des tables d'applications, des tables de tableaux et des tables de droits ;
- figure 6 : des particularités d'organisation des données dans la table des tableaux ;
- figure 7 : la conséquence de l'organisation de la table des tableaux sur le rangement des données dans une mémoire de données de la carte à puce ;
- figures 8, 9 et 10 : des organigrammes de création respectivement de chacune des tables selon l'invention.
- figures 11 et 12 : des organigrammes d'actions possibles sur le tableau de données.

La figure 2 représente une organisation schématique d'une carte à puce selon l'invention. Cette carte à puce 10 comporte, sur un support, un circuit électronique muni de moyens d'échange avec le monde extérieur, non représentés mais de type connu (métallisations de contacts). Ce circuit électronique comporte un microprocesseur 11 et une mémoire de données 12 (dans un exemple cette mémoire de données 12 est du type EEPROM, c'est-à-dire qu'elle est programmable et effaçable). La puce de la carte à puce comporte aussi une mémoire programme 13 (ROM) qui contient les instructions du microprocesseur propres à l'invention. Selon ce qui a été indiqué précédemment, dans la mémoire de la puce on reconnaît, en plus de la mémoire de données 12, la présence d'une table des applications 14, d'une table des tableaux 15, et d'une table des droits 16. On remarque aussi la présence, ce qui sera expliqué plus loin, d'une table 17 des clefs de chiffrement. La table 17 étant particulière, elle peut aussi être définie complémentairement dans la table des tableaux 15. Ceci permet une transmission chiffrée des données lues dans la mémoire 12. Le microprocesseur 11 est relié au différentes mémoires 12 à 17 par un bus de données et d'adresses 110. Une architecture type d'un microprocesseur est par ailleurs décrite dans le livre : " Comprendre les Microprocesseurs" de Daniel Queyssac, Editions Radio, France 1983.

Lors de l'utilisation d'une telle carte à puce 10, celle-ci est introduite dans un lecteur 18 comportant lui même un microprocesseur (non représenté) susceptible d'exécuter avec la carte 10 un programme 19 à l'aide d'un clavier 20, d'un moniteur de visualisation 21 et d'une machine 22.

Par exemple, comme représenté sur le moniteur 21 pour une application bancaire, un opérateur agissant sur le clavier 20 peut provoquer un retrait, et donc provoquer l'exécution d'une partie du programme 19, par lequel la machine 22 lui distribuera des billets de banque 23. En même temps, le lecteur enregistrera dans la carte à puce (ou dans un système centralisé de gestion non représenté) le débit du compte correspondant.

On a indiqué d'une manière schématique sur l'écran du moniteur 21 la présence de plusieurs applications possibles : une application BANQUE, une application GARAGE, une application SECSOC de sécurité sociale. On aurait pu faire figurer d'autres applications par exemple, TELECOM pour télécommunication ou autre. L'intérêt de l'invention vient de ce que différents opérateurs, différents émetteurs dit encore propriétaires d'application, sans relations contractuelles les uns avec les autres, peuvent utiliser un même support et ce sans risque que les actions effectuées par un des propriétaires d'applications ou des utilisateurs ne viennent influencer les données enregistrées dans des tableaux de données appartenant à un autre propriétaire d'application (on mesure facilement le risque que cela comporterait dans le domaine bancaire).

Par ailleurs, pour l'application bancaire, on montre sur l'écran du moniteur 21, plusieurs utilisations possibles : figurent par exemple les utilisations RETRAIT, VIREMENT, VISUALISATION. On distingue donc bien hiérarchiquement, d'une part les applications, et d'autre part des applications-utilisateur. Comme on le verra plus loin, ces applications et ces applications-utilisateur sont toutes enregistrées dans la table des applications. Cependant la différence qui les départage réside dans le fait que les applications peuvent créer et exploiter (lecture écriture, mise à jour, effacement) des tableaux de données alors que les applications-utilisateur ne peuvent que les exploiter. Cette exploitation est contrôlée de deux manières. D'une part, une allocation mémoire autorise l'insertion d'enregistrements, ou de lignes, dans un tableau de données si cette allocation n'est pas nulle. D'autre part la table des droits peut permettre à cette application-utilisateur d'insérer (INSERT), d'enlever (DELETE), de mettre à jour (MODIF), ou seulement de sélectionner (SELECT) un enregistrement dans un tableau de données sur lequel elle a reçu ces droits.

La mémoire de la carte étant partagée par plusieurs applications, lors de la création des applications et des applications-utilisateur, une grandeur maximum de mémoire utilisable est définie pour chaque application ou application-utilisateur. Dans son principe, cette information de grandeur est mémorisée dans un compteur présent dans la table des applications. lors de l'adjonction de données dans une ligne d'un tableau de données par une application ou une application-utilisateur, le contenu du compteur est diminué du nombre de caractère insérés. Dans le cas d'une destruction de données dans une ligne du tableau, il est augmenté du nombre de caractère supprimés. Au lieu de caractères, on peut aussi spécifier, dans l'allocation mémoire, un nombre de lignes de renseignements : la taille de la ligne pouvant être libre (dans la limite de la place disponible).

Dans la description qui va suivre, on va présenter chacune des tables de l'invention, en précisant d'une part leur structure, et d'autre part les ordres auxquels elles répondent : c'est-à-dire les instructions que le microprocesseur est chargé d'exécuter (à l'exclusion de tout autre) pour les créer et les modifier.

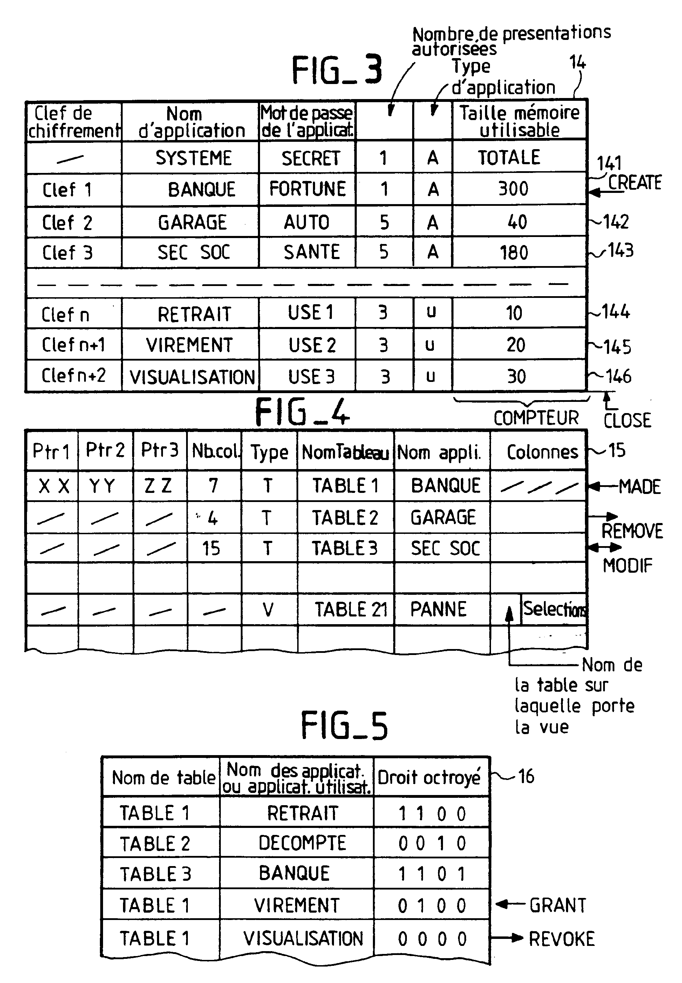

La figure 3 montre la table 14 des applications. Cette table comporte essentiellement quatre colonnes. Une première colonne est la colonne NOM D'APPLICATION. Une deuxième colonne est la colonne MOT DE PASSE de l'application. Une troisième colonne est la colonne TAILLE MEMOIRE UTILISABLE. D'une manière préférée, bien que cela ne soit pas obligatoire, la colonne mot de passe de l'application est elle même partagée en deux parties, une première partie comportant le code secret lui même et une seconde partie, située après ou avant la première, contenant un nombre maximum d'essais que l'on est susceptible d'effectuer pour présenter le code secret afin de pouvoir entrer dans l'application. De même que pour les tableaux de données, de préférence, la table des applications aura des colonnes dont la longueur est variable.

Par exemple le nom de l'application et le mot de passe de l'application sont limités en longueur. Le nombre d'essais de présentation du code secret, et l'espace mémoire utilisable seront mémorisés, en longueur fixe, par une valeur contenues respectivement dans un et deux octets. On verra plus loin comment il est possible de prévoir des tailles variables.

En rappel de ce qui est indiqué précédemment, on a présenté dans cette table six enregistrements 141 à 146 : les trois premiers représentent des applications proprement dites avec une taille de mémoire utilisable différente de zéro, les trois derniers représentent des applications-utilisateur avec elles aussi une taille mémoire utilisable non nulle. Ces applications-utilisateur ne pourront pas ultérieurement créer des tableaux de données. Pour les distinguer des applications, elles comportent dans une quatrième colonne une indication ici U, mentionnant leur type application-utilisateur. Les applications proprement dite comportent en correspondance une indication A. Bien entendu, d'autres symboles sont utilisables, ce qui compte c'est de différencier.

Pour simplifier, on a attribué à chaque application, un mot de passe : pour l'application BANQUE il s'agit du mot de passe FORTUNE, pour l'application GARAGE il s'agit du mot de passe AUTO, pour l'application sécurité sociale il s'agit du mot de passe SANTE. Pour les trois utilisations respectivement RETRAIT, VIREMENT, VISUALISATION, les mots de passes sont USE1, USE2, et USE3.

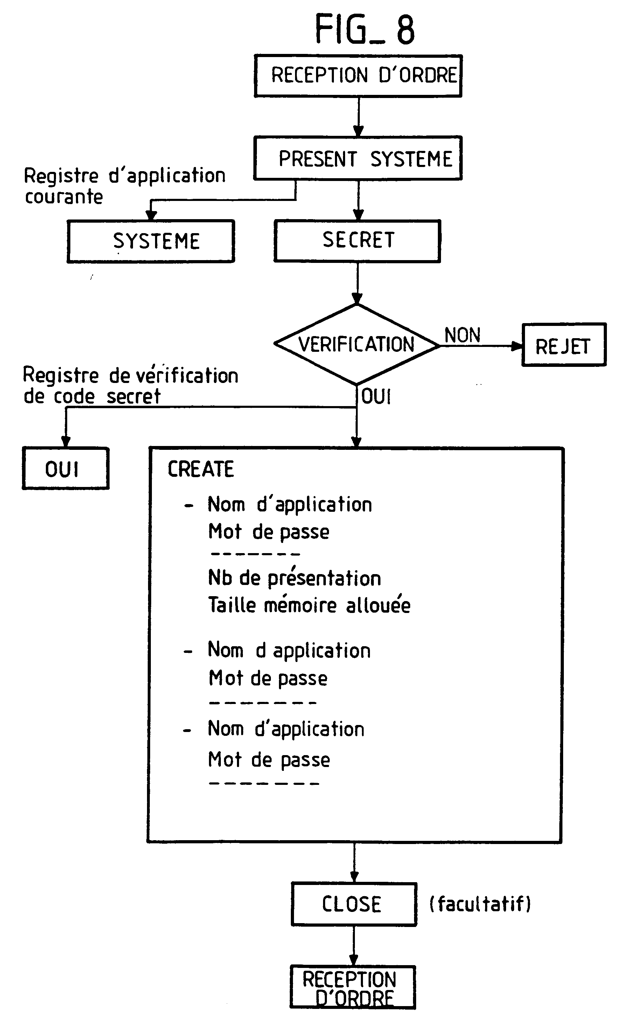

La figure 8 montre l'opération de création de la table des applications. Cette création est normalement effectuée par le fabricant de la carte à puce ou par une entité émettrice ayant obtenu auprès du fabricant le mot de passe d'une application SYSTEME. Pour simplifier la description on considérera que c'est le fabricant de la carte à puce qui fait cette opération. On appellera cette opération, par habitude, personnalisation de la carte, cette opération consiste à introduire dans la carte les applications BANQUE, SECSOC et GARAGE. Celui qui réalise la personnalisation attribue des codes secrets de préférence par un procédé aléatoire, aux applications. Ces applications pourront lors de la première utilisation de la carte changer ce code (CHANGE CODE) et s'attribuer un code qui ne soit connu que d'elles seules.

Avant que les cartes soient livrées nues, avant leur personnalisation avec les différentes applications, on peut considérer néanmoins qu'elles comportent, du fait de l'existence des instructions du microprocesseur d'une part et de l'organisation en tables d'autre part, une application système avec laquelle il va être possible de programmer la carte.

Le programme système comporte une instruction PRESENT qui doit être suivie dans sa syntaxe du nom de l'application concernée. Pour faciliter la gestion interne du système, la table des applications contient, au moins au début, une application particulière appelée SYSTEME. Le système contient le microprocesseur, la mémoire et le programme réalisant les fonctionnalités de l'invention. Ce programme est contenu en ROM. Dans le reste de cette description on parlera d'instructions du microprocesseur pour qualifier les fonctionnalités du système. L'instruction PRESENT a pour objet de chercher à comparer un code secret déjà enregistré dans la carte à un code secret proposé par l'opérateur avec un clavier comme le clavier 20.

En pratique, l'opérateur introduit la carte dans le lecteur 18 et envoie avec le clavier 20 les instructions précédentes : PRESENT SYSTEME. Puis le code secret, SECRET, est entré au clavier, et l'opérateur valide cette entrée. Une vérification est alors entreprise pour savoir si le code secret SECRET entré par le clavier est le même que le code secret SECRET précédemment enregistré dans la carte. Le code secret précédemment enregistré dans la carte est le code secret fondamental de la puce : il est normalement stocké dans une partie spéciale de la mémoire. Cette partie n'est pas accessible à l'extérieur de la carte. Seul le système de la carte y a accès. En cas d'échec de la vérification, on aboutit sur un programme de rejet.

Le programme de rejet peut comporter l'autorisation de représenter le code secret à nouveau, autant de fois au total que cela est permis pour l'application. Par exemple, dans le cas de l'application système on a le droit de ne présenter qu'une fois. Pour assurer cette fonction, l'instruction PRESENT du microprocesseur comporte dans l'ordre les actions suivantes :
1) le chargement du nombre de présentations dans un registre interne du microprocesseur,
2) l'incrémentation d'un compteur de tentatives à chaque tentative,
3) la comparaison du compteur et du nombre chargé,
4) le branchement conditionnel sur un rejet définitif ou une autre tentative. Le compteur de tentatives fait partie de la carte à puce.

Le programme de rejet comporte donc un compteur de tentatives, paramétrable par le nombre autorisé de présentation du mot de passe, qui, lorsqu'il est plein provoque le rejet proprement dit de la tentative. En pratique, ce rejet de la tentative peut conduire le système extérieur (lecteur 18) à retenir définitivement prisonnière la carte 10 et d'une manière connue en soi à l'orienter vers un réceptacle d'où son porteur ne peut la retirer.

Si la vérification a été faite avec succès, à ce stade de la fabrication, donc chez le fabricant de cartes à puce, on ne peut exécuter qu'un ordre : l'ordre CREATE. Par cet ordre CREATE, on peut enregistrer toutes les applications et les applications-utilisateur qu'on veut. Avec cette opération, le fabricant peut insérer des applications dans la table 14 des applications qui est aussi celle des applications-utilisateur. Pour cela, il suffit d'envoyer à la carte l'ordre CREATE, suivi du nom de l'application, du code secret attribué à cette application, de l'espace mémoire utilisable par cette application et du nombre autorisé de tentatives infructueuses de présentation de code secret pour cette application. Pour distinguer les applications-utilisateur des applications on ajoute à cet ordre soit un paramètre A pour les applications et U pour les applications-utilisateur. Ou encore, de préférence, la carte dispose d'un couple d'ordres CREATE APPLICATION et CREATE APPLICATIONUSER dont les paramètres sont les mêmes que pour le CREATE précédent, mais qui placent alors automatiquement les indications A ou U respectivement. On entre ainsi les enregistrements 141 à 146. Lorsque toutes les applications des utilisations sont créées dans la table 14, on peut envoyer une instruction CLOSE avec le clavier 20.

Cette instruction CLOSE a pour objet de faire basculer, par exemple d'une manière définitive, la possibilité d'insérer des applications avec l'ordre CREATE APPLICATION. En effet, si le fabricant ne connaît pas toutes les applications au moment de la personnalisation, on pourra plus tard et à condition que l'ordre CLOSE n'ait pas été lancé, en refaisant un PRESENT SYSTEME suivi du bon code secret, insérer d'autres applications. L'ordre CLOSE permet de fermer cette fonctionnalité en invalidant l'application SYSTEME. En fait l'application SYSTEME est alors tout simplement enlevée de la table des applications. Elle ne peut plus ensuite être reconnue par la carte. Par contre, les applications peuvent garder le droit de créer des applications-utilisateur avec l'ordre CREATE-APPLICATION USER.

Cette invalidation est, sur le plan matériel, obtenue par le claquage d'un fusible, ou par le basculement irrémédiable d'une cellule mémoire d'une mémoire de type EPROM d'un état logique dans un autre. L'opération CLOSE peut être suivie d'une opération REBOOT de redémarrage de la carte : l'alimentation électrique de la puce doit être coupée puis restaurée. Dans ce cas, la table 14 des applications est figée définitivement. Si on ne lance pas l'instruction CLOSE la carte n'est pas verrouillée.

On a représenté sur la figure 3, l'association des clefs de chiffrement avec les applications. Ceci signifie que la table 14 des applications peut comporter, comme cinquième colonne, une colonne représentative des clefs de chiffrement. Dans ce cas, les clefs de chiffrement doivent être indiquées une fois pour toute : elles ne sont jamais modifiables puisque la table 14 peut ne plus être accessible après l'ordre CLOSE. En pratique, et contrairement à ce qui est indiqué pour simplifier sur la figure 3, il y aura une table 17 des clefs de chiffrement dans laquelle seront associées une à une les applications et les clefs de chiffrement. La table 17 des clefs de chiffrement étant modifiable : on pourra modifier pour chaque application la valeur de la clef.

Les chiffrements dont il est question ici sont des chiffrements de types DES ou RSA connus par ailleurs pour lesquels le paramétrage du chiffrement nécessite une clef, dite secrète quand elle n'est connue que par un utilisateur et qu'elle n'est dépendante que d'une seule utilisation, ou dite publique lorsqu'elle est commune à tous les utilisateurs de l'application. Le chiffrement d'une donnée consiste à modifier cette donnée selon un tel algorithme ainsi paramétré. Le microprocesseur est muni d'une manière connue des instructions nécessaires à l'exécution d'un tel algorithme. Par ce principe, le microprocesseur de la carte peut mettre en oeuvre les clefs de chiffrement attachées à une application sans que les applications aient à partager des clefs. La table des clefs doit contenir à chaque ligne la clef et l'application à laquelle elle est destinée.

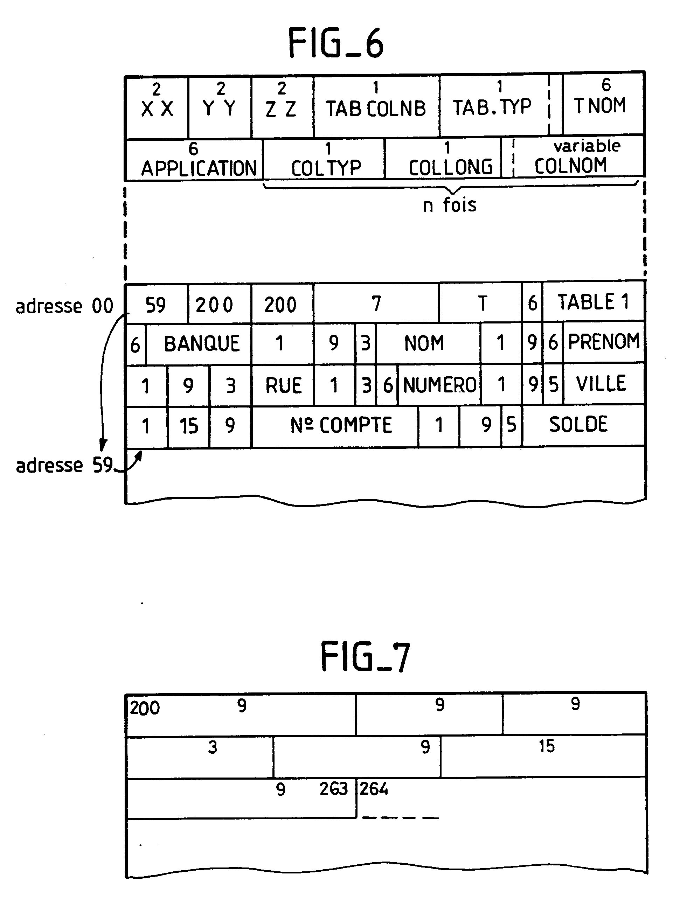

La figure 4 montre la table des tableaux de données 15. Cette table n'est pas fermée définitivement dans la carte : elle peut être complétée ou modifiée tout le long de la durée de vie de cette carte. Pour simplifier, on a indiqué que l'ordre exécuté par le microprocesseur pour créer un enregistrement dans cette table est un ordre MADE. Cet ordre MADE est associable à un ordre REMOVE par lequel il est possible de supprimer un enregistrement. La table des tableaux 15 est montrée sous une forme théorique dans la figure 4 et sous une forme réelle dans la figure 6. Elle comporte essentiellement, confer figure 4, l'association d'un nom d'application, d'un nom de tableau et d'une description des colonnes du tableau de données que l'on crée. De plus, de manière préférée la table des tableaux 15 comporte des colonnes relatives à des pointeurs, ici trois types de pointeurs, ainsi qu'une colonne relative au nombre de colonnes du tableau de données lui même, et enfin une autre colonne relative au type du tableau, T pour tableau et V pour vue, représenté par l'enregistrement.

Sur la figure 4 on remarque qu'on a affecté à chacune des applications principales un tableau, respectivement TABLE1 à l'application BANQUE, TABLE2 à l'application GARAGE, TABLE3 à l'application SECSOC. On voit qu'il n'y a pas de tableau propres aux applications-utilisateur indiquées précédemment, parce que ces dernières étant munies de l'indication U il leur est interdit de créer des tableaux. Ces applications-utilisateur ne peuvent qu'insérer, modifier, effacer ou sélectionner des données dans des tableaux déjà créés (si des droits ont été accordés en ce sens).

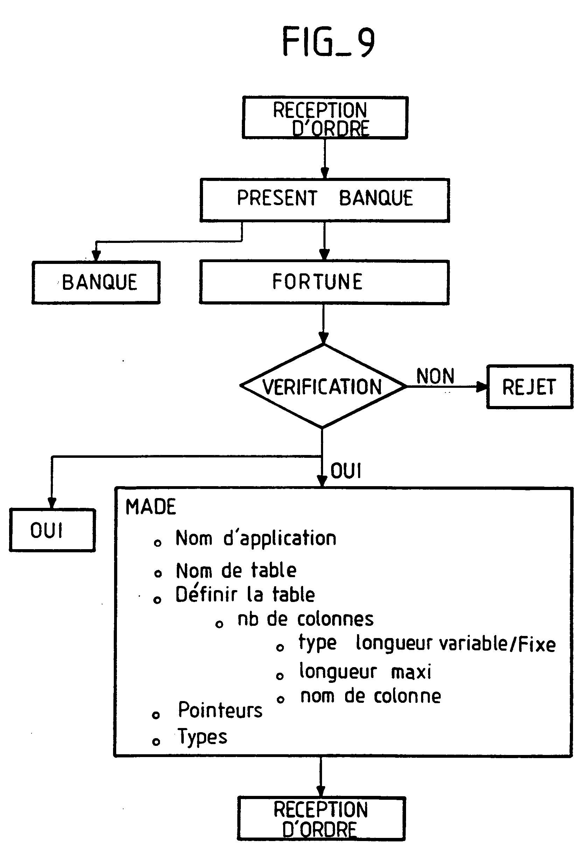

La table 15 des tableaux de données est créée au fur et à mesure par les propriétaires des applications selon l'organigramme présenté sur la figure 9. Pour créer un tableau, par exemple TABLE1, dans la table 15 des tableaux de données, un propriétaire d'application exécute, comme précédemment, un ordre PRESENT, dans le cas présent "PRESENT BANQUE". Dans ce cas, le microprocesseur selon l'algorithme déjà étudié précédemment demande que puisse être vérifiée la concordance du code secret, associé à BANQUE dans la table 14, ici "FORTUNE", avec un code secret entré au clavier. En cas de succès de cette vérification, on peut exécuter les ordres MADE ou REMOVE.

Tous les ordres, y compris l'ordre PRESENT, sont exécutés alors que le microprocesseur de la carte est en RECEPTION D'ORDRE : il attend une sollicitation extérieure. Dès qu'un ordre est envoyé, (par exemple par le clavier) cet ordre est d'abord analysé par comparaison aux ordres possibles pour le microprocesseur. Si l'ordre est erroné, interdit ou mal reçu, à l'issue de l'analyse la carte se remet en attente de RECEPTION D'ORDRE. Dans le cas contraire, l'exécution est commencée. En ce qui concerne l'ordre PRESENT il provoque l'inscription dans un registre du microprocesseur, dit registre de l'application courante, du nom de l'application pour laquelle cet ordre PRESENT est lancé. Par exemple, ce registre d'application courante est chargé des noms SYSTEM ou BANQUE dans les deux exemples représentés Figures 8 et 9 respectivement. Après ce chargement, la comparaison du code secret s'effectue et provoque l'inscription, en cas de succès, d'une indication OUI, similaire, dans un registre de code secret du microprocesseur. Ensuite, le microprocesseur se remet en attente d'ordre. Pour exécuter les ordres MADE ou REMOVE, le microprocesseur vérifie après l'analyse de ces ordres que l'application (BANQUE) pour laquelle ces ordres ont été lancés est associée, dans la table 14 des applications, à une indication de type A permettant la création de tableau de données. Si l'indication est U la création ou la suppression sont interdites.

Avec l'ordre MADE, le programme automatique lié à cet ordre porte le contenu du registre d'application courante à l'endroit, dans la table 14, du nom de l'application. C'est automatique. Dans l'exemple où on a affaire à l'application BANQUE, ce nom d'application est porté automatiquement par le microprocesseur dans la colonne correspondante. On doit ensuite spécifier, selon un ordre prédéterminé, le nom de la table et définir la table et les colonnes. La définition de la table comporte essentiellement la désignation du nombre de colonnes et, pour chaque colonne, la désignation du type de la colonne : colonne à longueur variable ou à longueur fixe. Il faut aussi indiquer la longueur maximum de la colonne (que se soit à longueur variable ou à longueur fixe). De manière préférée cette longueur sera comprise entre 1 et 255. Enfin, il faut donner à chaque colonne du tableau de données un nom. La description des colonnes doit se faire en autant de fois qu'il y a des colonnes. On définit également le type de la table T pour table et V pour vue. On verra plus loin à quoi correspond ce type.

A la fin de l'ordre MADE le système retourne en réception d'ordre. Si on exécute un ordre REMOVE, on supprime un enregistrement dans la table 14 à condition que l'on soit propriétaire de l'application c'est-à-dire qu'on soit susceptible de rentrer au préalable à la fois le nom de l'application et le code secret attaché à cette application. La table des tableaux de données crée une relation de propriété entre le propriétaire de l'application et le tableau.

La figure 6 montre, d'une manière plus détaillée, comment est constituée la table 15 des tableaux de données. De manière à ne pas perdre de place, cette table des tableaux de données comporte des indications tendant à compacter le stockage de données dans la mémoire 12 de données. En regardant le haut de la figure 6, on distingue trois premiers pointeurs : les pointeurs XX, YY, et ZZ. Ceci signifie que chacun d'eux est décrit sur deux octets. Chaque pointeur représente une adresse. L'exemple montré juste en-dessous du haut de la figure 6 permet de se faire une idée de la signification des différents éléments. Ainsi, le premier pointeur XX marque l'adresse relative, dans la partie de la mémoire 12 qui contient la table 15, de la fin de l'enregistrement qui est commencé par ce pointeur.

Comme on le verra plus loin, l'enregistrement en cause dans l'exemple comporte cinquante huit caractères et par conséquent le code XX comporte l'adresse 59. Ceci signifie que pour aller regarder une description d'un tableau de données suivant il faut parcourir cinquante neuf octets supplémentaires. Ceci permet rapidement au microprocesseur de vérifier quels sont les tableaux de données auxquels il peut avoir accès pour une application concernée.

Le deuxième pointeur YY donne l'adresse du premier enregistrement stocké dans la mémoire de données qui est décrit selon le tableau de données étudié. Par exemple, si YY vaut 200 la première information enregistrée dans la mémoire de données 12 selon la structure du tableau de données étudié se trouve à l'adresse 200, voir figure 7. Le troisième pointeur ZZ indique l'adresse du dernier enregistrement relatif au tableau. Compte tenu de la description du tableau en cause et du fait qu'il n'y a qu'un enregistrement, cette adresse ZZ vaut aussi ici 200 comme YY (Figure 7).

A la suite des pointeurs, sur un caractère, on indique le nombre de colonnes de la table. Dans le cas de l'application bancaire, ce nombre de colonnes est égal à 7 (voir figure 4). Puis on indique le type du tableau, lui aussi sur un octet. Dans le cas présent, il s'agit d'un tableau, on indique alors une lettre T. S'il s'agissait d'une vue on aurait fait apparaître une indication V (ou autre). On indiquera par ailleurs quelle différence il y a entre les tableaux et les vues. Puis on indique le nom du tableau. Ici, d'une manière préférée, on fait précéder l'indication du nom du tableau d'un octet dont la signification est le nombre de caractères (d'octets) de ce nom de tableau. S'agissant du tableau TABLE1 dont le nom comporte six caractères, on portera dans cet octet la valeur 6. Le nom du tableau est alors donné sur six octets. On remarquera qu'on peut accepter tous les caractères standard, sauf des caractères correspondant à des caractères de contrôle du microprocesseur, mais que par ailleurs un nom de tableau sera interdit s'il existe déjà pour une autre application. L'ordre MADE réalise cette vérification. Le nom de l'application dans le tableau de données pourra être entré lui aussi en étant précédé d'un octet dont la valeur est égale au nombre de caractères de ce nom de l'application. Dans le cas présent, on a aussi choisi 6, de ce fait les noms d'applications dans la table 15 ne peuvent avoir que six caractères. Si l'inscription du nom de l'application est automatique, on pourra reprendre ce nom tel qu'il existe dans la table 14, c'est-à-dire en longueur fixe ou en longueur variable. Dans ce dernier cas, on reporte aussi sa longueur. Puis, autant de fois qu'il y a de colonnes dans le tableau de données, on indiquera, sur un caractère le type de la colonne, sur un autre caractère la longueur de la colonne, et enfin, précédé de son nombre de caractères, le nom de la colonne. Dans l'exemple représenté sur le bas de la figure 6, on a représenté sept colonnes avec à chaque fois un code "1" représentatif d'un type de colonne à longueur fixe. Cette longueur fixe elle même étant fixé égale à 9 pour les trois premières colonnes, à 3 pour la quatrième colonne, à 9 pour la cinquième colonne, à 15 pour la sixième colonne et à 9 pour la septième colonne. Puis les noms de ces colonnes sont donnés à chaque fois en étant précédé du nombre de caractère dans ces noms. Il s'agit là de renseigner le nom, le prénom, la rue, le numéro, la ville, le numéro de compte, et le solde bancaire d'un individu titulaire de la carte. L'ordre MADE permet aussi au microprocesseur de vérifier que la taille mémoire est plus petite que la taille mémoire allouée. Pour cela, il se sert des longueurs maximums indiquées. Leur somme soit être inférieure à la taille allouée.

La figure 7 montre, dans la mémoire de données 12 de type EEPROM, les enregistrements correspondants. On remarque qu'on a choisi ici des enregistrements à longueur fixe, mais on pourra préférer choisir comme précédemment des enregistrements à longueur variable, ce qui permet, pour des mots courts, de compacter la zone occupée dans la mémoire 7. Le caractère séparateur entre les mots à longueur variable est donc induit dans l'invention 1) par la structure de description, et 2) par la valeur de l'octet qui précède. Un utilisateur qui programme sa carte (dans la mesure ou l'application le lui permet) n'a donc pas à se préoccuper de ce problème.

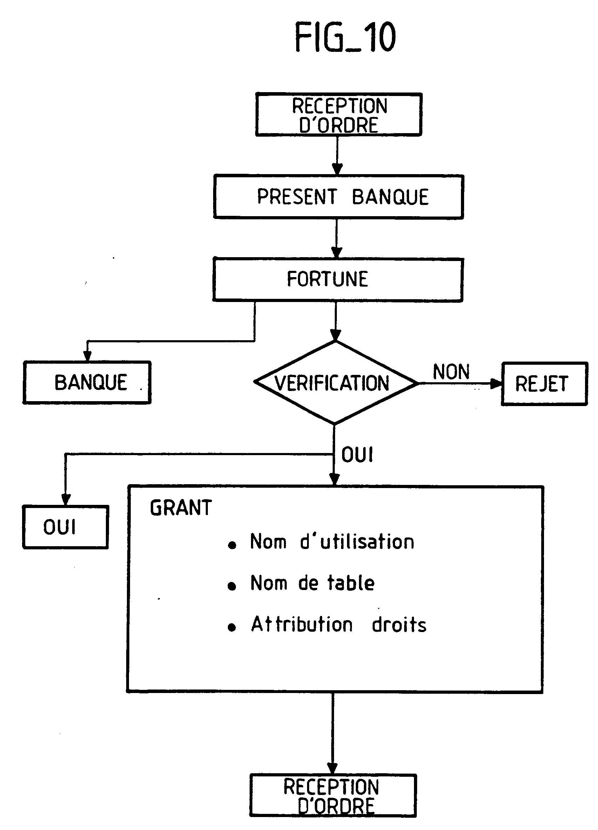

On va étudier maintenant la table 16 dite table des droits. Dans cette table, un propriétaire d'application, par exemple une banque propriétaire de l'application BANQUE, va pouvoir octroyer à des applications-utilisateur, RETRAIT, VIREMENT, VISUALISATION, des droits d'utilisation SELECT, INSERT, MODIF, DELETE sur des enregistrements de sa table ici la TABLE1. Autrement dit, un utilisateur qui mettra en oeuvre une application-utilisateur pourra effectuer des transactions sur les données. Ces transactions sont autorisées selon le mode décrit dans cette table des droits. Pour remplir la table 16, on effectue, confer figure 10, une même suite d'opérations. On lance l'ordre PRESENT, associé à l'application concernée : par exemple PRESENT BANQUE. Puis on présente le code secret : FORTUNE.

En cas de succès, on peut, avec un ordre de création, dit GRANT, créer des droits, ou les révoquer avec un ordre d'annulation REVOKE. Dans une opération d'octroi de droit, on désigne d'une part le tableau sur lequel on octroie les droits, ensuite le nom de l'applications-utilisateur pour laquelle ces droits sont octroyés, et enfin le type des droits octroyés. Avec l'ordre GRANT le microprocesseur vérifie, à l'aide de la table 15, que le tableau (par exemple TABLE1) concerné est bien lié à l'application (BANQUE) au titre de laquelle on octroie les droits. Cette vérification utilise le nom de l'application courante chargée dans le registre pour accéder à la table 15. Les droits octroyés peuvent être codés sur quatre octets, un premier octet concerne la lecture et correspond à une sélection, les trois autres correspondant, respectivement et dans l'ordre, à une insertion de données, à une modification des données, ou à une suppression des données.

Ces droits correspondent aux ordres vus plus haut. Tout propriétaire d'application, propriétaire du tableau de données associé, peut entrer à tout moment des nouveaux droits sur ces tableaux dans la table des droits 16 ou en enlever.

Pour le chiffrement, le fonctionnement est le suivant. Au moment où, au titre d'une utilisation (par exemple RETRAIT : figure 3), des données sont extraites de la mémoire de données 12, elles sont chiffrées par un algorithme automatique de chiffrement RSA (ou autre) propre au microprocesseur paramétré par la clef (CLEF1) de l'application ou de l'applications-utilisateur en cause. En conséquence, quand ces données sont transmises de la carte 10 au lecteur 18, elles le sont dans un état chiffré. Bien entendu, le lecteur comporte un même algorithme de chiffrement et connaît, par ailleurs, la clef (CLEF1) relative à cette application ou application-utilisateur pour déchiffrer les informations transmises. De cette façon, une application peut autoriser une transaction sur les données d'un tableau qu'elle gère sans craindre de révélation.

On va décrire maintenant la structure des instructions du microprocesseur qui lui permet d'exécuter tous les ordres qui sont SELECT, INSERT, MODIF et DELETE.

Pour exécuter les ordres SELECT, INSERT, MODIF ou DELETE, on exécute déjà comme vu précédemment un ordre PRESENT. Dans le cas présent, cet ordre PRESENT sera suivi du nom de l'application-utilisateur (ou aussi de l'application) pour laquelle ces ordres sont à exécuter. Il est également suivi de la présentation du code secret affecté. En cas de succès, le nom de l'application-utilisateur est porté dans le registre de l'application courante et l'indication OUI est portée dans le registre de code secret. Pour ne pas avoir à paraphraser dans la description l'ordre des opérations, on se reportera aux dessins concernés.

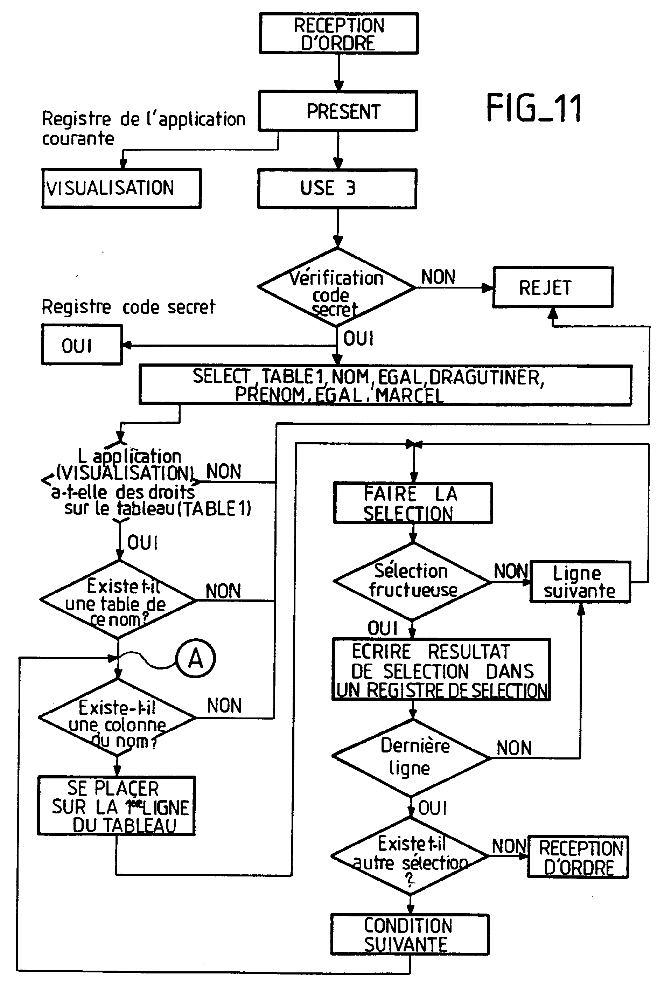

L'ordre SELECT peut être lancé de la manière suivante. Sa syntaxe comporte SELECT, suivi du nom de la table, et suivi d'un ou plusieurs critères de sélection. Un critère de sélection comporte un nom de colonne, un opérateur et une valeur. L'opérateur peut être : égal, différent, supérieur, inférieur, inférieur ou égal, ou supérieur ou égal. Les critères de sélection peuvent être multiples. Dans ce cas, la syntaxe de l'ordre SELECT comporte tout simplement, à la fin et se suivant les uns les autres, les différents critères. La figure 11 montre l'organigramme de l'ordre SELECT. Dans cet organigramme on vérifie que les sélections sont correctement indiquées. En fin de sélection, le résultat des sélections est stocké dans un registre de sélection. Le fait que l'application a (ou n'a pas) des droits sur le tableau de donné est extrait de la table des droits 16. L'existence du tableau de données, et, dans ce tableau de données, d'une ou des colonnes ayant les noms spécifiés est extrait de la table 15 des tableaux de données. Une fois que la ou les données sélectionnées ont été rangées dans le registre de résultat on peut faire avec cette ou ces données toute opération de type connu.

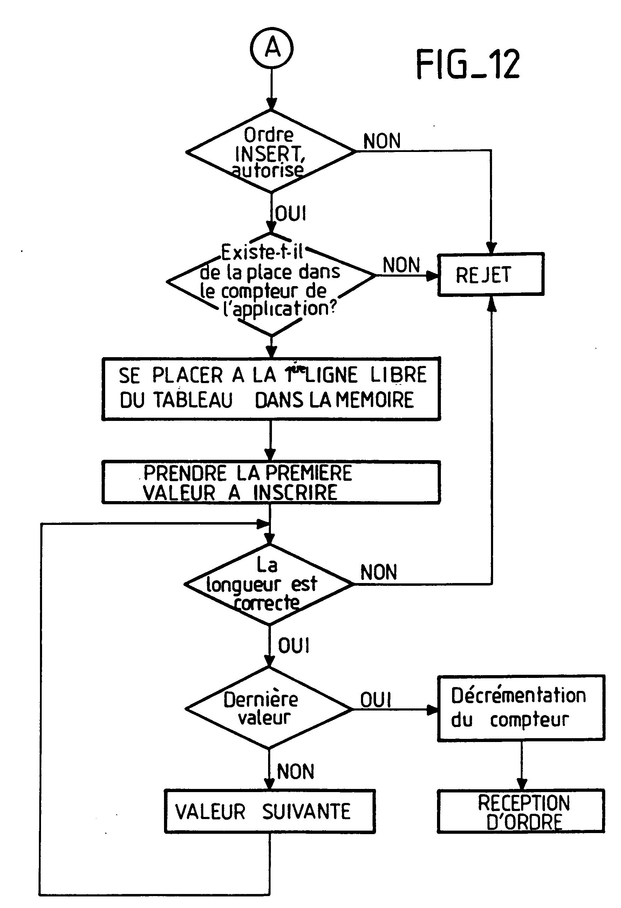

L'ordre INSERT, figure 12, possède les mêmes étapes antécédentes que l'ordre SELECT avant A. La syntaxe de cet ordre comporte cet ordre INSERT, suivi à la file de toutes les valeurs à inscrire, dans l'ordre où elles doivent être inscrites. Pour exécuter cet ordre, le microprocesseur vérifie que l'allocation mémoire de l'application et que la taille mémoire utilisable sont suffisantes. Les zones de la table 14 où sont rangées ces tailles mémoires utilisables sont des zones effaçables et modifiables, de préférence de type EEPROM. En effet, après l'insertion, la valeur enregistrée dans une telle zone, pour l'application concernée est décrémentée de la place occupée par la taille de l'insertion qu'on vient de faire. Ceci explique qu'une application-utilisateur dont la taille mémoire utilisable est nulle (dès le départ ou par suite d'exécution d'insertion) ne peut pas effectuer d'insertion dans le tableau de données.

L'ordre DELETE est du même type que l'ordre INSERT, sauf qu'il fonctionne à l'envers. Dans ce cas, le compteur est incrémenté à l'issue. Cependant, pour éviter qu'une application-utilisateur, qui n'a dès le départ aucune taille mémoire utilisable, ne puisse en acquérir une sur un tableau de données, on vérifie au préalable, dans la table des droits 15 que l'effacement est autorisé. Cette vérification est du même type que la vérification du droit à exécuter l'ordre d'insertion.

L'ordre MODIF de mise à jour comporte la même syntaxe que l'ordre de sélection suivie du nom d'une colonne puis d'une valeur. Ceci signifie qu'on place la nouvelle valeur, dans la ou les lignes sélectionnées, à l'endroit de la colonne spécifiée. La mise à jour peut aussi permettre de mettre à jour plusieurs colonnes différentes, correspondant néanmoins à des mêmes critères de sélection.

Les vues V sont des sous-tableaux. Elle permettent d'avoir accès directement à des enregistrements qui correspondent dans un tableau de données à des sélections sur des données. Les vues sont déclarées, dans la table 15 des tableaux de données de la même façon que les applications ou applications-utilisateur. La seule différence porte sur les spécifications des colonnes qui s'apparentent, dans leur cas, à une sélection. Ces spécifications de colonnes comporte donc d'une part le nom du tableau de données (par exemple TABLE2) sur lequel porte la sélection et d'autre part, la sélection elle même. Cette sélection est indiquées dans les mêmes termes que la syntaxe de l'ordre SELECT vu précédemment. Dans la table 15, les applications-utilisateur concernés par les vues peuvent recevoir des droits de sélection et de modification mais de préférence pas d'insertion ni d'effacement.

## Revendications

1. Procédé de chargement et de gestion de plusieurs applications (BANQUE, GARAGE, SEC SOC) pouvant impliquer des applications-utilisateurs (RETRAIT, VIREMENT, VISUALISATION) dans une mémoire de carte à puce, une application-utilisateur étant une application utilisée elle-même dans le cadre d'une application, caractérisée en ce que,
une application disposant
- du droit de constituer des applications-utilisateurs,
- du droit d'établir des tableaux de données, et
- du droit d'octroyer des droits à des applications ou des applications-utilisateurs sur ses propres tableaux de données,
une application-utilisateur ne disposant d'aucun de ces droits,
pour le chargement d'applications ou d'applications-utilisateur
- on enregistre dans la mémoire de la carte à puce (CREATE) une table (14) des applications et des éventuelles applications-utilisateur qui associe à chaque nom d'application ou d'applications-utilisateur un mot de passe et un espace mémoire,
- on enregistre (MADE) dans la mémoire de la carte à puce une table (15) de tableaux de données, les tableaux de données de cette table associant pour chaque application un nom de tableau (TABLE1, TABLE2, TABLE3) au nom de l'application (BANQUE, GARAGE, SEC SOC) et les données relatives à cette application
- on enregistre (GRANT) dans la mémoire de la carte à puce une table (16) des droits octroyés à des applications ou à des applications-utilisateur sur ces tableaux de données, cette table des droits associant à chaque nom de tableau de données (TABLE1, TABLE2, TABLE3) des noms d'application (BANQUE, GARAGE, SEC SOC) ou d'applications-utilisateur (RETRAIT, VIREMENT, VISUALISATION) et des droits octroyés à ces applications ou applications-utilisateur
et où pour la gestion des applications ou des applications-utilisateur,
- on autorise la gestion des données contenues dans un tableau de données en cours d'utilisation en fonction des droits octroyés à une application ou une application-utilisateur en cours.

2. Procédé selon la revendication 1, caractérisé en ce qu'on autorise
- l'enregistrement d'un tableau de données (TABLE1) pour une application (BANQUE) si on présente avec succès le code secret (FORTUNE) associé à cette application et si l'allocation mémoire pour cette application le permet,
- l'enregistrement de droits sur un tableau de données (TABLE1) si on présente avec succès le nom de l'application (BANQUE) pour laquelle on a créé ce tableau et/ou le code secret (FORTUNE) de cette application, et
- la gestion des données contenues dans un tableau en fonction de l'application en cours et des droits octroyés relatifs à cette application.

3. Procédé selon la revendication 1 ou la revendication 2, caractérisé en ce qu'on enregistre dans la table des applications des applications et des applications-utilisateur.

4. Procédé selon l'une quelconque des revendications 1 à 3, caractérisé en ce qu'on enregistre en mémoire une table (14) de clefs de chiffrement associées chacune à une application pour n'autoriser le transfert de données contenues dans la carte que sous une forme chiffrée dépendant d'un algorithme de chiffrement paramètré par cette clef.

5. Procédé selon l'une quelconque des revendications 1 à 4, caractérisé en ce que, dans la table des applications, on affecte à chaque application un nombre maximum d'essais de transactions avec la carte dans cette application.

6. Procédé selon l'une quelconque des revendications 1 à 5, caractérisé en ce que, dans la table (15) des tableaux on indique comme description pour chaque tableau au moins un des éléments suivants:
- le nom de l'application propriétaire du tableau,
- le nom du tableau,
- le nombre de colonnes du tableau,
- le type du tableau,
- les adresses, dans la mémoire, des données relatives à ce tableau,
- l'adresse du début de la description du tableau suivant, et
- pour chaque colonne du tableau, le type de la colonne, la longueur de la colonne, et le nom de la colonne.

7. Procédé selon la revendication 6, caractérisé en ce que, dans la table des tableaux de données, pour chaque nom de tableau, d'application, ou de colonne on fait précéder ce nom par un nombre représentatif du nombre de caractères de ce nom.

8. Procédé selon l'une quelconque des revendications 1 à 7, caractérisé en ce que, dans la table des tableaux de données on crée un tableau de données en lui affectant automatiquement comme nom d'application propriétaire une information représentative du nom de l'application pour laquelle on a présenté avec succès le code secret.

## Patentansprüche

1. Verfahren zum Laden und Verwalten mehrerer Anwendungen (BANQUE, GARAGE, SEC SOC), das Benutzeranwendungen (RETRAIT, VIREMENT, VISUALISATION) in einer Speicher-Chipkarte einschließen kann, wobei eine Benutzeranwendung eine Anwendung ist, die selbst im Rahmen einer Anwendung verwendet wird, dadurch gekennzeichnet, daß
bei einer Anwendung, die über
- das Recht, Benutzeranwendungen zu bilden,
- das Recht, Datentabellen zu erstellen, und
- das Recht, auf ihren eigenen Datentabellen Rechte an Anwendungen oder Benutzeranwendungen zu verleihen, verfügt,
bei einer Benutzeranwendung, die über keines dieser Rechte verfügt,
man zum Laden von Anwendungen oder Benutzeranwendungen
- in den Speicher der Chipkarte ein Verzeichnis (14) der Anwendungen und der eventuellen Benutzeranwendungen eingibt (CREATE), das jeder Anwendungs- oder Benutzeranwendungsbezeichnung ein Paßwort und einen Speicherplatz zuordnet,
- in den Speicher der Chipkarte ein Verzeichnis (15) mit Datentabellen eingibt (MADE), wobei die Datentabellen dieses Verzeichnisses für jede Anwendung der Anwendungsbezeichnung (BANQUE, GARAGE, SEC SOC) einen Tabellennamen (TABLE1, TABLE2, TABLE3) zuordnet, und die Daten, die sich auf diese Anwendung beziehen,
- man in den Speicher der Chipkarte ein Verzeichnis (16) mit den auf diesen Datentabellen den Anwendungen oder Benutzeranwendungen gewährten Rechten eingibt (GRANT), wobei dieses Rechteverzeichnis jedem Datentabellennamen (TABLE1, TABLE2, TABLE3) Anwendungsbezeichnungen (BANQUE, GARAGE, SEC SOC) oder Benutzeranwendungsbezeichnungen (RETRAIT, VIREMENT, VISUALISATION) zuordnet, sowie Rechte, die diesen Anwendungen oder Benutzeranwendungen gewährt wurden,
und bei der man zur Verwaltung der Anwendungen oder Benutzeranwendungen
- die Verwaltung der Daten gestattet, die während der Benutzung in einer Datentabelle enthalten sind, entsprechend den einer laufenden Anwendung oder Benutzeranwendung zugestandenen Rechten.

2. Verfahren nach Anspruch 1, dadurch gekennzeichnet, daß man folgendes zuläßt:
- die Eingabe einer Datentabelle (TABLE1) für eine Anwendung (BANQUE), wenn man den dieser Anwendung zugeordneten Geheimcode (FORTUNE) erfolgreich angibt, und wenn die Speicherzuweisung für diese Anwendung es zuläßt,
- die Eingabe von Rechten auf einer Datentabelle (TABLE1), wenn man die Anwendungsbezeichnung (BANQUE) erfolgreich angibt, für die man diese Tabelle und/oder den Geheimcode (FORTUNE) dieser Anwendung geschaffen hat, und
- die Verwaltung der in einer Tabelle enthaltenen Daten entsprechend der laufenden Anwendung und den gewährten Rechten für diese Anwendung.

3. Verfahren nach Anspruch 1 oder 2, dadurch gekennzeichnet, daß man in das Verzeichnis der Anwendungen Anwendungen und Benutzeranwendungen eingibt.

4. Verfahren nach einem der Ansprüche 1 bis 3, dadurch gekennzeichnet, daß man ein Verzeichnis (14) von Chiffrierungsschlüsseln einspeichert, die jeweils einer Anwendung zugeordnet sind, damit der Transfer von in der Karte enthaltenen Daten nur in chiffrierter Form erfolgen kann, die von einem durch diesen Schlüssel parametrierten Chiffrierungsalgorithmus abhängt.

5. Verfahren nach einem der Ansprüche 1 bis 4, dadurch gekennzeichnet, daß man im Anwendungsverzeichnis jeder Anwendung eine maximale Zahl von Transaktionsversuchen mit der Karte in dieser Anwendung zugesteht.

6. Verfahren nach einem der Ansprüche 1 bis 5, dadurch gekennzeichnet, daß man in dem Verzeichnis (15) der Tabellen als Beschreibung für jede Tabelle mindestens eines der folgenden Daten angibt:
- die Bezeichnung der Besitzeranwendung der Tabelle,
- den Tabellennamen,
- die Anzahl von Spalten der Tabelle,
- die Tabellenart,
- die Adressen der Daten für diese Tabelle im Speicher,
- die Adresse des Anfangs der Beschreibung der folgenden Tabelle, und
- für jede Spalte der Tabelle die Art der Spalte, die Länge der Spalte und den Namen der Spalte.

7. Verfahren nach Anspruch 6, dadurch gekennzeichnet, daß man in dem Datentabellenverzeichnis jeder Tabellen-, Anwendungs- oder Spaltenbezeichnung eine Anzahl von Schriftzeichen voranstellt, die der Anzahl Schriftzeichen dieser Bezeichnung entspricht.

8. Verfahren nach einem der Ansprüche 1 bis 7, dadurch gekennzeichnet, daß man in dem Datentabellenverzeichnis eine Datentabelle herstellt, indem man diesem automatisch als Besitzeranwendungsbezeichnung eine Information zuweist, die für die Anwendungsbezeichnung steht, für die man den Geheimcode erfolgreich angegeben hat.

## Claims

1. Process for loading and managing a number of applications (BANK, GARAGE, COMP.SEC.) which may imply user applications (WITHDRAWAL, DEPOSIT, DISPLAY) in a microchip memory card, a user application being an application itself used within the framework of an application, characterised in that,
an application possessing
- the right to form user applications,
- the right to establish lists of data, and
- the right to grant rights to applications or user applications on its own data lists,
a user application not possessing any of these rights, for the loading of applications or user applications,
- in the memory of the microchip card (CREATE) one registers a table (14) of the applications and of any user applications, which associates with each application name or user application name a pass word and a memory space,
- in the memory of the microchip card one registers (MADE) a table (15) of data lists, the data lists of this table associating for each application a table name (TABLE 1, TABLE 2, TABLE 3) with the name of the application (BANK, GARAGE, COMP. SEC) and that data relating to this application,
- in the memory of the microchip card one registers (GRANT) a table (16) of the rights accorded to applications or to user applications over these data lists, this table of the rights associating with each data list name (TABLE 1, TABLE 2, TABLE 3) application names (BANK, GARAGE, COMP. SEC.) or user application names (WITHDRAWAL, DEPOSIT, DISPLAY) and rights granted over these applications or user applications,
and wherein, for the management of the applications or user applications,
- one authorizes the management of the data contained in a data list being used, in accordance with the rights granted over an application or a user application in progress.

2. Process in accordance with Claim 1, characterised in that one authorizes
- the recording of a data list (TABLE 1) for an application (BANK) if the secret code (FORTUNE) associated with this application is successfully presented and if the memory allocation for this application permits,
- the recording of rights over a data list (TABLE 1) if the name of the application (BANK) for which this table has been created and/or the secret code (FORTUNE) of this application are successfully presented, and
- the management of the data contained in a list, in accordance with the application in progress and with the rights granted with regard to this application.

3. Process in accordance with Claim 1 or Claim 2, characterised in that applications and user applications are recorded in the list of applications.

4. Process in accordance with any one of Claims 1 to 3, characterised in that one registers in the memory a table (14) of coding keys, each associated with an application, in order to ensure that data contained in the card can only be transferred in a coded form depending on a coded algorithm parametered by this key.

5. Process in accordance with any one of Claims 1 to 4, characterised in that, in the table of applications one allocates to each application a maximum number of transaction attempts with the card in this application.

6. Process in accordance with any one of Claims 1 to 5, characterised in that, in the table (15) of the lists, one indicates, as a description for each of these latter, at least one of the following elements:
- the name of the application to which the list belongs;
- the name of the list;
- the number of columns in the list;
- the type of list;
- the addresses, in the memory, of the data relating to this list;
- the address of the beginning of the description of the subsequent list; and
- for each column in the list, the type of column, the length of this column and the name of the column.

7. Process in accordance with Claim 6, characterised in that, in the table of the data lists, for each list name, application name or column name a number representing the number of characters in this name is placed in front of the latter.

8. Process according to any one of Claims 1 to 7, characterised in that, in the table of data lists, a data list is created by automatically allocating to it, as the owner application name, an item of information representative of the name of the application for which the secret code has been successfully presented.
